# EUROPÄISCHE PATENTSCHRIFT

(11) **EP 1 000 797 B1**
(45) Veröffentlichungstag und Bekanntmachung des Hinweises auf die Patenterteilung: **21.09.2005**
(21) Anmeldenummer: 99120921.4
(22) Anmeldetag: 29.10.1999
(51) Int. Cl.: B60N 2/00

(54) **Vorrichtung und Verfahren zum Erkennen der Belegungsart eines Fahrzeugsitzes**
Device and method for recognising the type of occupation of a vehicle seat
Dispositif et méthode pour reconnaitre le type d'occupation d'un siège de véhicule

(30) Priorität: 12.11.1998 DE 19852239
(43) Veröffentlichungstag der Anmeldung: 17.05.2000
(73) Patentinhaber: Volkswagen Aktiengesellschaft, 38436 Wolfsburg (DE)
(72) Erfinder: Keinberger, Franz, 38116 Braunschweig (DE)

(56) Entgegenhaltungen:
- EP-A- 0 458 102
- DE-A- 4 212 018
- DE-A- 19 610 833
- DE-A- 19 630 260
- DE-A- 19 705 123
- DE-A- 19 722 163
- DE-C- 19 648 267
- DE-C- 19 717 273
- US-A- 5 413 378
- US-A- 5 573 269
- US-A- 6 092 838
- PATENT ABSTRACTS OF JAPAN vol. 1998, no. 01, 30. Januar 1998 (1998-01-30) & JP 09 240424 A (DENSO CORP), 16. September 1997 (1997-09-16)

## Beschreibung

Die Erfindung betrifft eine Vorrichtung zur Präsenzerkennung einer lebenden Person, insbesondere zur Erkennung der Belegungsart eines Fahrzeugsitzes, die eine zeit- und ortsauflösende Sensoreinrichtung mit einem Sensor aufweist, deren Ausgangssignal einer Auswerteeinheit der Vorrichtung zuführbar ist, durch die aus dem Sensorsignal eine Kraft- und/oder Druckverteilung des vom Sensor erfaßten Bereichs des Fahrzeugsitzes berechenbar ist.

Die Präsenzerkennung einer lebenden Person auf einem Fahrzeugsitz ist insbesondere bei mit einem Airbag ausgerüsteten Fahrzeugen von Bedeutung, da bei einem Unfall der (Beifahrer-)Airbag nur ausgelöst werden soll, wenn der Fahrzeugsitz tatsächlich von einem Insassen besetzt ist. Wenn der Sitz aber gar nicht besetzt oder lediglich mit einem Gepäckstück belegt oder einen Kindersitz trägt, soll die Auslösung des Airbags unterdrückt werden, um unnötige Reparaturkosten zu vermeiden bzw. eine Gefährdung des im Kindersitz aufgenommenen Säuglings durch den expandierenden Airbag zu verhindern.

Außerdem ist es bekannt, daß ein von einer Person besetzter Fahrersitz anderen dynamischen Bewegungen unterliegt, als wenn auf ihm ein starrer Gegenstand, beispielsweise ein Gepäckstück oder ein Kindersitz, liegt: Eine Person versetzt den Sitz und damit einen im Sitz angeordneten Sensor durch ihre eigene Bewegung in Schwingungen anderer Frequenzbereiche als ein an sich starrer Gegenstand.

Aus der DE 196 30 260 ist eine auf dem o. g. Prinzip beruhende Anordnung zur Präsenzerkennung einer lebenden Person bekannt, welche mindestens einen auf Bewegungen, insbesondere eines einen Fahrzeugsitz belegenden Insassens oder Gegenstands, reagierenden Sensor aufweist, wobei vorgesehen ist, daß Mittel vorhanden sind, die das Sensorausgangssignal frequenzselektiv in mehrere Signalanteile zerlegen, und wobei weitere Mittel vorhanden sind, welche durch einen Vergleich der frequenzselektiven Signalanteile ein Entscheidungskriterium für die Präsenzerkennung einer lebenden Person, insbesondere der Belegung oder Nichtbelegung des Fahrzeugsitzes mit dem Insassen, bilden. Nachteilig hierbei ist der komplexe Aufbau der Anordnung, welcher in hohen Herstellungs- und Montagekosten resultiert.

Aus der EP 0 458 102 ist es bekannt, daß zur Präsenzerkennung einer lebenden Person auf einem Fahrzeugsitz in diesem ein Sitzschalter angeordnet ist, der bei einem belegten Fahrzeugsitz ein entsprechendes Signal an die Auswerteeinheit der Vorrichtung sendet. Da allein die Tatsache, daß der Sitzsensor eine auf die Sitzfläche des Fahrzeugsitzes einwirkende Kraft oder einen Druck registriert, für sich allein gesehen noch nicht ausreichend ist, um zu erkennen, ob auf dem Fahrzeugsitz eine lebende Person, die im Kollisionsfall durch einen sich entfaltenden Airbag zu schützen ist, oder ob auf dem Sitz ein Gegenstand, bei dem eine Auslösung des Airbags aus sicherheits- und reparaturtechnischen Gründen unterdrückt werden soll, befindet, ist bei der vorgenannten Vorrichtung des weiteren vorgesehen, daß sich vor dem Fahrzeugsitz noch ein Fußraumschalter befindet, der ein Signal abgibt, wenn er druck- oder kraftbeaufschlagt und ein bestimmter Schwellenwert überschritten wird, so daß dadurch die Anwesenheit oder Abwesenheit eines Fahrzeuginsassen im Bereich vor dem Fahrzeugsitz ermittelbar ist: Der Airbag wird nur dann aktiviert, wenn sowohl der Sitzschalter als auch der Fußraumschalter eine entsprechende Druck- oder Kraftbeaufschlagung signalisieren. Die bekannte Vorrichtung besitzt den Nachteil, daß auch sie relativ aufwendig ist, da sowohl ein Sitzschalter als auch ein Fußraumschalter vorhanden sein müssen, was relativ hohe Herstellungs- und Montagekosten mit sich bringt.

Aus der DE 197 17 273, welche den nächstliegenden Stand der Technik darstellt, ist eine Präsenzerkennungsvorrichtung mit drei Sensoren bekannt.

Es ist daher Aufgabe der Erfindung, eine Vorrichtung und ein Verfahren der eingangs genannten Art derart weiterzubilden, daß in einfacher Art und Weise eine Unterscheidung, ob ein Fahrzeugsitz von einem Insassen besetzt oder von einem Gepäckstück oder einem Kindersitz belegt ist, ermöglicht wird.

Diese Aufgabe wird durch die erfindungsgemäße Vorrichtung dadurch gelöst, daß die Auswerteeinheit der Vorrichtung aus einer zu einem Zeitpunkt t₁ korrelierten Druck- und/oder Kraftverteilung mindestens ein Paar von Bezugspunkten auswählt und den räumlichen Abstand zumindest zwischen diesen beiden Referenzpunkten des Referenzpunkte-Paars ermittelt, daß die Auswerteeinheit aus einer zu einem späteren Zeitpunkt t₂ korrelierten Druck- und/oder Kraftverteilung wiederum den räumlichen Abstand zumindest dieser Referenzpunkte ermittelt, und daß bei einem im wesentlichen gleichbleibenden räumlichen Abstand der Referenzpunkte ein die Belegung des Fahrzeugsitzes mit einem Objekt oder die Nichtbelegung durch eine Person charakterisierendes erstes Steuersignal und bei einem sich ändernden räumlichen Abstand zwischen den Referenzpunkten ein eine Belegung des Fahrzeugsitzes einer Person charakterisierendes zweites Steuersignal erzeugbar ist.

Das erfindungsgemäße Verfahren sieht vor, daß die Auswerteeinheit aus einer zu einem Zeitpunkt t₁ korrelierten Druck- und/oder Kraftverteilung mindestens ein Paar von Referenzpunkten auswählt und den räumlichen Abstand zumindest zwischen diesen beiden Referenzpunkten dieses Referenzpunkte-Paares ermittelt, daß durch die Auswerteeinheit aus einer zu einem späteren Zeitpunkt t₂ korrelierten Druck- und/oder Kraftverteilung wiederum der räumliche Abstand zumindest dieser Referenzpunkte des Referenzpunkte-Paares ermittelt wird, und daß bei einem im wesentlichen gleichbleibenden räumlichen Abstand der Referenzpunkte des Referenzpunkte-Paares ein die Belegung des Fahrzeugsitzes mit einem Objekt bzw. die Nichtbelegung durch eine Person charakterisierendes erstes Steuersignal und bei einem sich ändernden räumlichen Abstands zwischen den Referenzpunkten des Referenzpunkte-Paares eine Belegung des Fahrzeugsitzes mit einer Person charakterisierendes zweites Steuersignal erzeugt wird.

Durch die erfindungsgemäßen Maßnahmen wird in vorteilhafter Art und Weise eine Vorrichtung und ein Verfahren geschaffen, die sich dadurch auszeichnen, daß die Präsenzerkennung mit besonders einfachen und daher kostengünstigen Mitteln durchführbar ist. In vorteilhafter Art und Weise wird hierzu lediglich ein an und für sich bekannter orts- und zeitauflösender Druck- und/oder Kraftsensor sowie eine dessen Sensorsignal auswertende Auswerteeinheit, z. B. ein Mikroprozessor/Bordcomputer, wie er bereits bei fast allen Fahrzeugen vorhanden ist, benötigt. Dies führt in vorteilhafter Art und Weise zu besonders günstigen Herstellungs- und Montagekosten.

Vorteilhafte Weiterbildungen der Erfindung sind Gegenstand der Unteransprüche.

Weitere Einzelheiten und Vorteile der Erfindung sind dem Ausführungsbeispiel zu entnehmen, daß im folgenden anhand der einzigen Figur beschrieben wird. Es zeigt:

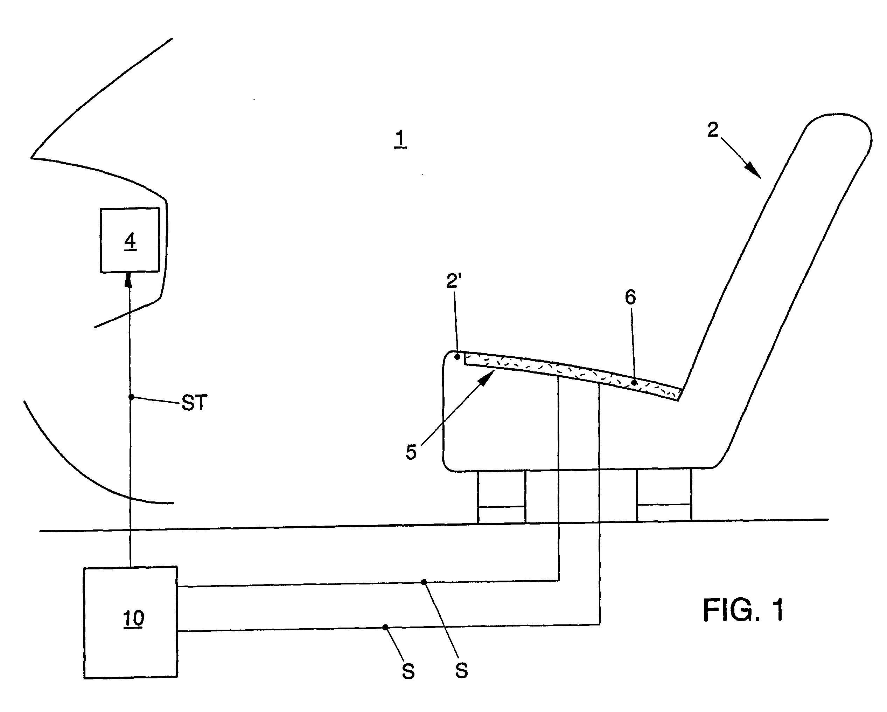

Figur 1 ein schematische Darstellung eines Ausführungsbeispiels

In Figur 1 ist eine schematische Zeichnung des Kraftfahrzeug 1 mit einem Fahrzeugsitz 2 dargestellt, welcher unter seiner Sitzfläche 2' eine Sensoreinrichtung 5 mit einem nur schematisch dargestellten orts- und zeitauflösenden Druck- und/oder Kraftsensor 6 aufweist. Ein derartiger Sensor 6 ist - z. B. aus der DE 42 37 072 C1, in der eine druckabhängige Widerstandsmatte (Interlink-Matte) beschrieben ist, bekannt. Selbstverständlich kann außer der vorgenannten Widerstandsmatte auch ein beliebig anderer Sensor zur Ausbildung des Sensors 6 der Sensoreinrichtung 5 verwendet werden, solange gewährleistet ist, daß eine Ortsauflösung des zu überwachenden Bereichs, also zumindest eines Teils der Sitzfläche 2' des Fahrzeugsitzes 2, gegeben ist, wobei es durchaus ausreichend ist, wenn die Ortsauflösung lediglich durch ein Raster von Meßpunkten gegeben ist, welche jeweils einen Abstand von ca. 0,5-5,5 cm, vorzugsweise 1-2,5 cm, aufweisen. Da - wie nachfolgend beschrieben - die Präsenzerkennung durch einen Vergleich von jeweils mindestens zwei zu verschiedenen Zeitpunkten gewonnenen Druck- und/oder Kraftverteilungen durchgeführt wird, ist es erforderlich, daß die Sensoreinrichtung 3 auch zeitauflösend ist, wobei aber eine Zeitauflösung von 0,1-5 sec. ausreichend ist. Es bedarf keiner Erwähnung, daß die vorgenannten Auflösungen nur beispielhaften Charakter besitzen und die Allgemeingültigkeit der nachfolgenden Überlegungen nicht einschränken.

Ein Ausgangssignal S der Sensoreinrichtung 3 wird einer Auswerteeinheit 10 zugeführt. Diese berechnet nun aus dem ihr zugeführten Sensorsignal S eine die Kraft- und/oder Druckbeaufschlagung des Sitzkissens 2' zu einem Zeitpunkt t₁ charakterisierende Druck- und/oder Kraftverteilung. Danach wird von der Auswerteeinheit 10 mindestens ein Paar von Referenzpunkten aus dieser Druck- und/oder Kraftverteilung ausgewählt und der räumlicher Abstand zwischen den beiden Referenzpunkten des ausgewählten Paares wird bestimmt. Obwohl für eine Vielzahl von Anwendungsfällen bereits ein Paar von Referenzpunkten ausreichend ist, wird aus Sicherheitsgründen bevorzugt, daß die Auswerteeinheit 10 eine Vielzahl von Referenzpunkte-Paare auswählt und jeweils den räumlichen Abstand zwischen den beiden Referenzpunkten eines jeden Referenzpunkte-Paars berechnet. Es ist auch möglich, daß alternativ oder ergänzend zur vorgenannten Abstandsbestimmung zwischen zwei Referenzpunkten eines Referenzpuntke-Paars auch vorgesehen sein kann, daß für einen oder mehrere Referenzpunkte nicht nur der räumliche Abstand dieses Referenzpunktes zum zweiten Referenzpunkt seines Referenzpunkte-Paares, sondern auch der räumliche Abstand des Referenzpunktes zu mindestens einem weiteren, nicht zu seinem Referenzpunkte-Paar gehörigen, weiteren Referenzpunkt eines anderen Referenzpunkte-Paares bestimmt wird. Die derart gewonnene Abstandsinformation zwischen den Referenzpunkten wird in einem Speicher der Auswerteeinheit 10 abgespeichert.

Die Auswerteeinheit 10 berechnet in einem zweiten Zeitpunkt t₂, welcher nach dem Zeitpunkt t₁ liegt, aus dem zu diesem Zeitpunkt t₂ korrelierten Sensorsignal S der Sensoreinrichtung 5 eine neue Kraft- und/oder Druckverteilung und untersucht diese darauf, wie sich die im ersten Schritt berechneten räumlichen Abstände zwischen entsprechenden Referenzpunkten der ersten Druck- und/oder Kraftverteilung verändert haben. Wird durch diesen Vergleich einander entsprechender Referenzpunkte festgestellt, daß sich in der Zeitspanne t₂-t₁ der räumliche Abstand zwischen zwei Referenzpunkten einer signifikanten Menge von Referenzpunkte-Paare verändert hat, so wird dies als zuverlässiges Anzeichen dafür interpretiert, daß der Fahrzeugsitz von einer Person besetzt ist. Ändert sich jedoch der Abstand entsprechender Referenzpunkte einer signifikanten Menge von Referenzpunkte-Paaren nicht oder liegt er unterhalb eines vorgegebenen Schwellwerts, so wird dies als zuverlässiges Anzeichen dafür interpretiert, daß der Fahrzeugsitz 2 von einem Objekt (in Abgrenzung zu einer lebenden Person) belegt wird.

Die Auswerteeinrichtung erzeugt nun in Abhängigkeit der von ihr festgestellten Anwesenheit einer Person oder Abwesenheit einer Person bzw. der Belegung des Fahrzeugsitzes 2 mit dem Objekt ein erste bzw. zweites Steuersignal ST, das bewirkt, daß die Auslösung eines Airbags 4 des Kraftfahrzeugs 1 erlaubt bzw. verhindert wird.

Die vorgenannten Maßnahmen besitzen den Vorteil, daß sie in einfacher Art und Weise die Präsenzerkennung einer lebenden Person, d. h. die Unterscheidung, ob der Fahrzeugsitz 2 von einer lebenden Person, bei der im Unfallsfalle der Airbag 4 ausgelöst werden soll, oder ein die Abwesenheit einer Person bzw. die Belegung des Fahrzeugsitzes 2 mit einem Objekt - in diesem Fall soll der Airbag 4 bei einem Unfall nicht ausgelöst werden - durchgeführt werden kann.

### BEZUGSZEICHENLISTE

- 1.: Kraftfahrzeug
- 2.: Fahrzeugsitz
- 2'.: Sitzfläche
- 3.: Sensoreinrichtung
- 4.: Airbag
- 5.: Sensoreinrichtung
- 6.: Druck- und/oder Kraftsensor
- 10.: Auswerteeinheit

- ST: Steuersignal
- S: Sensorsignal

## Patentansprüche

1. Vorrichtung zur Präsenzerkennung einer lebenden Person, insbesondere zur Erkennung der Belegungsart eines Fahrzeugsitzes (2), die eine zeit- und ortsauflösende Sensoreinrichtung (5) mit einem Sensor (6) aufweist, deren Ausgangssignal (S) einer Auswerteeinheit (10) der Vorrichtung zuführbar ist, durch die aus dem Sensorsignal (S) eine Kraft- und/oder Druckverteilung des vom Sensor (6) erfaßten Bereichs (2') eines Fahrzeugsitzes (2) berechenbar ist, **dadurch gekennzeichnet, daß** die Auswerteeinheit (10) der Vorrichtung (1) aus einer zu einem Zeitpunkt t₁ korrelierten Druck- und/oder Kraftverteilung mindestens ein Paar von Referenzpunkten ausgewählt und den räumliche Abstand zumindest zwischen diesen beiden Referenzpunkten dieses Referenzpunkte-Paars ermittelt, daß die Auswerteeinheit (10) aus einer zu einem späteren Zeitpunkt t₂ korrelierten Druck- und/oder Kraftverteilung wiederum den räumlichen Abstand dieser Referenzpunkte des Referenzpunkte-Paars ermittelt, und daß bei einem im wesentlichen gleichbleibenden räumlichen Abstand der Referenzpunkte des Referenzpunkte-Paars ein die Belegung des Fahrzeugsitzes (2) mit einem Objekt bzw. die Nichtbelegung durch eine Person charakterisierendes erstes Steuersignal (ST) und bei einem sich ändernden räumlichen Abstand zwischen den Referenzpunkten des Referenzpunkte-Paars eine Belegung des Fahrzeugsitzes (2) mit einer Person charakterisierenden zweites Steuersignal (ST) durch die Auswerteeinheit (10) erzeugbar ist.

2. Vorrichtung nach Anspruch 1, **dadurch gekennzeichnet, daß** durch die Auswerteeinheit (10) für mindestens einen Referenzpunkt mindestens eines der Referenzpunkte-Paares der räumliche Abstand zwischen diesem Referenzpunkt des Referenzpunkte-Paars und mindestens einem weiteren Referenzpunkt mindestens eines weiteren Referenzpunkte-Paars bestimmbar ist.

3. Vorrichtung nach einem der vorangehenden Ansprüche, **dadurch gekennzeichnet, daß** das Steuersignal (ST) zu einer die Auslösung des Airbags (4) steuernden Steuereinrichtung leitbar ist.

4. Vorrichtung nach einem der vorangehenden Ansprüche, **dadurch gekennzeichnet, daß** die Auslösung des Airbags (4) verhindert wird, wenn die Auswerteeinheit (10) das erste Steuersignal (ST) erzeugt.

5. Verfahren zur Präsenzerkennung einer lebenden Person, insbesondere zur Erkennung der Belegungsart eines Fahrzeugsitzes (2), bei dem aus einem Ausgangssignal (S) einer zeit- und ortsauflösenden Sensoreinrichtung (5) in einer Auswerteeinheit (10) eine Kraft- und/oder Druckverteilung eines vom Sensor (6) der Sensoreinrichtung (5) erfaßten Bereichs (2') eines Fahrzeugsitzes (2) berechnet wird, **dadurch gekennzeichnet, daß** die Auswerteeinheit (10) aus einer zu einem Zeitpunkt t₁ korrelierten Druck- und/oder Kraftverteilung mindestens ein Paar von Referenzpunkten auswählt und den räumlichen Abstand zumindest zwischen diesen beiden Referenzpunkten dieses Referenzpunkte-Paares ermittelt, daß durch die Auswerteeinheit (10) aus einer zu einem späteren Zeitpunkt t₂ korrelierten Druck- und/oder Kraftverteilung wiederum der räumliche Abstand zumindest dieser Referenzpunkte des Referenzpunkte-Paares ermittelt wird, und daß bei einem im wesentlichen gleichbleibenden räumlichen Abstand der Referenzpunkte des Referenzpunkte-Paares ein die Belegung des Fahrzeugsitzes (2) mit einem Objekt bzw. die Nichtbelegung durch eine Person charakterisierendes erstes Steuersignal (ST) und bei einem sich ändernden räumlichen Abstands zwischen den Referenzpunkten des Referenzpunkte-Paares eine Belegung des Fahrzeugsitzes (2) mit einer Person charakterisierendes zweites Steuersignal (ST) erzeugt wird.

6. Verfahren nach Anspruch 5, **dadurch gekennzeichnet, daß** für mindestens einen Referenzpunkt mindestens eines der Referenzpunkte-Paare der räumliche Abstand zwischen diesem Referenzpunkte des Referenzpunkte-Paares und mindestens einem weiteren Referenzpunkt mindestens eines weiteren Referenzpunkte-Paares bestimmt wird.

## Claims

1. Device for detecting the presence of a living person, in particular for detecting the type of occupation of a vehicle seat (2) which has a time-resolving and spatially-resolving sensor device (5) which has a sensor (6) and whose output signal (S) can be fed to an evaluation unit (10) of the device by means of which a force distribution and/or pressure distribution of that region (2') of a vehicle seat (2) which is sensed by the sensor (6) can be calculated from the sensor signal (S), **characterized in that** the evaluation unit (10) of the device (1) selects at least one pair of reference points from a pressure distribution and/or force distribution which is correlated with a time t₁, and determines the spatial distance at least between these two reference points of this pair of reference points, **in that** the evaluation unit (10) in turn determines the spatial distance between these reference points of the pair of reference points from a pressure distribution and/or force distribution which is correlated with a later time t₂, and **in that**, when there is an essentially constant spatial distance between the reference points of the pair of reference points, a first control signal (ST) which characterizes the occupation of the vehicle seat (2) with an object or the non-occupation by a person and when there is a changing spatial distance between the reference points of the pair of reference points, an occupation of the vehicle seat (2) with a second control signal (ST) characterizing a person can be generated by the evaluation unit (10).

2. Device according to Claim 1, **characterized in that** for at least one reference point of at least one of the pair of reference points the spatial distance between this reference point of the pair of reference points and at least one further reference point of at least one further pair of reference points can be determined by the evaluation unit (10).

3. Device according to one of the preceding claims, **characterized in that** the control signal (ST) can be fed to a control device which controls the triggering of the airbag (4).

4. Device according to one of the preceding claims, **characterized in that** the triggering of the airbag (4) is prevented if the evaluation unit (10) generates the first control signal (ST).

5. Method for detecting the presence of a living person, in particular for detecting the type of occupation of a vehicle seat (2) in which a force distribution and/or pressure distribution of an area (2') of a vehicle (2) which is sensed by the sensor (6) of the sensor device (5) is calculated in an evaluation unit (10) from an output signal (S) of a time-resolving and spatially-resolving sensor device (5), **characterized in that** the evaluation unit (10) selects at least one pair of reference points from a pressure distribution and/or force distribution which is correlated with a time t₁, and determines the spatial distance at least between these two reference points of this pair of reference points, **in that** the evaluation unit (10) in turn determines the spatial distance between at least these reference points of the pair of reference points from a pressure distribution and/or force distribution which is correlated with a later time t₂, and **in that**, when there is an essentially constant spatial distance between the reference points of the pair of reference points, a first control signal (ST) which characterizes the occupation of the vehicle seat (2) with an object or the non-occupation by a person and when there is a changing spatial distance between the reference points of the pair of reference points, an occupation of the vehicle seat (2) with a second control signal (ST) characterizing a person is generated.

6. Method according to Claim 5, **characterized in that** for at least one reference point of at least one of the pair of reference points the spatial distance between this reference point of the pair of reference points and at least one further reference point of at least one further pair of reference points is determined.

## Revendications

1. Dispositif pour reconnaître la présence d'une personne animée, notamment pour reconnaître le type d'occupation d'un siège de véhicule (2), qui présente un dispositif de capteur (5) se déclenchant en fonction du temps et du lieu comprenant un capteur (6), dont le signal de sortie (S) peut être envoyé à une unité d'analyse (10) du dispositif, grâce à laquelle, à partir du signal de capteur (S), une répartition de force et/ou de pression de la région (2') d'un siège de véhicule (2) détectée par le capteur (6) peut être calculée, **caractérisé en ce que** l'unité d'analyse (10) du dispositif (1), à partir d'une répartition de pression et/ou de force corrélée à un instant t₁ sélectionne au moins une paire de points de référence et détermine la distance spatiale au moins entre ces deux points de référence de cette paire de points de référence, **en ce que** l'unité d'analyse (10), à partir d'une répartition de pression et/ou de force corrélée à un instant ultérieur t₂ détecte à nouveau la distance spatiale entre ces points de référence de la paire de points de référence et **en ce que** dans le cas où la distance spatiale entre les points de référence de la paire de points de référence reste essentiellement inchangée, un premier signal de commande (ST) caractérisant l'occupation du siège du véhicule (2) par un objet, ou bien la non-occupation du siège par une personne peut être produit, et dans le cas où la distance spatiale entre les points de référence de la paire de points de référence change, un deuxième signal de commande (ST) caractérisant l'occupation du siège du véhicule (2) par une personne peut être produit par l'unité d'analyse (10).

2. Dispositif selon la revendication 1, **caractérisé en ce que** grâce à l'unité d'analyse (10) pour au moins un point de référence d'au moins une des paires de points de référence, la distance spatiale entre ce point de référence de la paire de points de référence et au moins un autre point de référence d'au moins une autre paire de points de référence peut être déterminée.

3. Dispositif selon l'une quelconque des revendications précédentes, **caractérisé en ce que** le signal de commande (ST) peut être guidé vers un dispositif de commande commandant le déclenchement de l'airbag (4).

4. Dispositif selon l'une quelconque des revendications précédentes, **caractérisé en ce que** le déclenchement de l'airbag (4) est empêché lorsque l'unité d'analyse (10) produit le premier signal de commande (ST).

5. Procédé pour reconnaître la présence d'une personne animée, notamment pour reconnaître le type d'occupation d'un siège de véhicule (2), dans lequel, à partir d'un signal de sortie (S) d'un dispositif de capteur (5) se déclenchant en fonction du temps et du lieu, une répartition de force et/ou de pression d'une région (2') d'un siège de véhicule (2) détectée par le capteur (6) du dispositif de capteur (5) est calculée dans une unité d'analyse (10), **caractérisé en ce que** l'unité d'analyse (10), à partir d'une répartition de pression et/ou de force corrélée à un instant t₁ sélectionne au moins une paire de points de référence et détermine la distance spatiale au moins entre ces deux points de référence de cette paire de points de référence, **en ce que**, grâce à l'unité d'analyse (10), à partir d'une répartition de pression et/ou de force corrélée à un instant ultérieur t₂, la distance spatiale entre au moins ces points de référence de la paire de points de référence est à nouveau calculée, et **en ce que** dans le cas où la distance spatiale entre les points de référence de la paire de points de référence reste essentiellement inchangée, un premier signal de commande (ST) caractérisant l'occupation du siège du véhicule (2) par un objet, ou bien la non-occupation du siège par une personne est produit, et dans le cas où la distance spatiale entre les points de référence de la paire de points de référence change, un deuxième signal de commande (ST) caractérisant l'occupation du siège du véhicule (2) par une personne est produit.

6. Procédé selon la revendication 5, **caractérisé en ce que** pour au moins un point de référence d'au moins une des paires de points de référence, la distance spatiale entre ce point de référence de la paire de points de référence et au moins un autre point de référence d'au moins une autre paire de points de référence est déterminée.
